# EUROPÄISCHE PATENTSCHRIFT

(11) **EP 3 615 321 B1**
(45) Veröffentlichungstag und Bekanntmachung des Hinweises auf die Patenterteilung: **20.07.2022**
(21) Anmeldenummer: 18713872.2
(22) Anmeldetag: 23.03.2018
(51) Int. Cl.: B29D 99/00, B29C 70/54, B29C 37/00, B29C 70/30

(54) **VERFAHREN ZUR ZEITGLEICHEN HERSTELLUNG VON ZWEI ODER MEHR FASERVERBUNDBAUTEILEN**
METHOD FOR THE SIMULTANEOUS PRODUCTION OF TWO OR MORE FIBER COMPOSITE COMPONENTS
PROCÉDÉ POUR LA FABRICATION SIMULTANÉE DE DEUX ÉLÉMENTS COMPOSITES FIBREUX OU PLUS

(30) Priorität: 26.04.2017 DE 102017108902
(43) Veröffentlichungstag der Anmeldung: 04.03.2020
(73) Patentinhaber: Wobben Properties GmbH, 26607 Aurich (DE)
(72) Erfinder: RAPHAEL, Reinhard, 26632 Ihlow (DE); FREESE, Christian, 26624 Südbrookmerland (DE)
(74) Vertreter: Eisenführ Speiser
(86) Internationale Anmeldenummer: PCT/EP2018/057507
(87) Internationale Veröffentlichungsnummer: WO 2018/197124

(56) Entgegenhaltungen:
- EP-A2- 2 317 126
- DE-A1-102004 017 888
- US-A- 4 229 473

## Beschreibung

Die Erfindung betrifft ein Verfahren zur zeitgleichen Herstellung von zwei oder mehr Faserverbundbauteilen.

Faserverbundbauteile der eingangs genannten Art bestehen im Wesentlichen aus Faserverbundmaterialien oder umfassen diese. Faserverbundmaterialien weisen im Wesentlichen zwei Hauptbestandteile auf. Die Hauptbestandteile sind meist mindestens ein Matrixmaterial und Fasern, wobei die Hauptbestandteile derartige Wechselwirkungen miteinander aufweisen, dass das Faserverbundmaterial in der Regel höherwertige Eigenschaften aufweist als jedes der beiden einzelnen beteiligten Hauptbestandteile. Das Matrixmaterial bildet die Matrix des Faserverbundmaterials aus, welches die Fasern in ihrer Position halten und Spannungen zwischen den Fasern übertragen und verteilen. Die Matrix dient ferner dem Schutz der Fasern vor von extern einwirkenden mechanischen und/oder chemischen Einflüssen. Die Festigkeit des Faserverbundmaterials wird in der Regel im Wesentlichen von den Fasern bestimmt, wobei die Festigkeit ferner in Abhängigkeit des Faserverlaufs in der Matrix entweder richtungsabhängig, das heißt anisotrop, oder richtungsunabhängig, isotrop, ist.

Eine Herausforderung für die Fertigungstechnik im Bereich von Faserverbundbauteilen liegt insbesondere auch darin, dass die Trennung von Faserverbundmaterialien, beispielsweise durch Sägen, Drehen oder Fräsen, aufwendig ist. Zunächst einmal ist der Werkzeugverschleiß bei derartigen Verfahren zur Trennung von Faserverbundbauteilen hoch und ferner ist auch das qualitative Ergebnis meist nicht zufriedenstellend. Das Trennen von Faserverbundbauteilen kann mit dem Verfahren des Wasserstrahlschneidens erfolgen, wobei auch hier die Qualität des Trennergebnisses Verbesserungspotenzial bietet, beispielsweise hinsichtlich der Konturgenauigkeit. Ferner sind die existierenden Trennverfahren oft mit hohen Kosten verbunden.

Das Deutsche Patent- und Markenamt hat in der Prioritätsanmeldung zu vorliegender Anmeldung folgenden Stand der Technik recherchiert: DE 10 2014 224 720 A1 und Martin Perterer: Schadensidentifikation und -bewertung von CFK-Bauteilen mittels phasenmodulierter Thermographie. Dissertation, 04.10.2012, 214.

Die EP 2 317 126 A2 offenbart Verfahren, die verbesserte strukturelle Konfigurationen und Konstruktionsmethoden in Bezug auf die Tragflächen der Rotorblätter von Windkraftanlagen und anderer Strukturen betreffen.

Die DE 10 2004 017 888 A1 offenbart die Merkmale des Oberbegriffs des Anspruchs 1 und offenbart ein Verfahren zur Herstellung von Hohlprofilen durch Umformung und Verbindung von flächigen Halbzeugen sowie deren bevorzugte Verwendung im Kraftfahrzeugbau.

Es ist daher eine Aufgabe der vorliegenden Erfindung, ein Verfahren zur zeitgleichen Herstellung von zwei oder mehr Faserverbundbauteilen, ein Faserverbundbauteil, ein Rotorblatt einer Windenergieanlage sowie eine Windenergieanlage bereitzustellen, welche ein oder mehrere der genannten Nachteile vermindern oder beseitigen. Insbesondere ist es eine Aufgabe der Erfindung, eine Lösung bereitzustellen, die die Herstellung von zwei oder mehr Faserverbundbauteilen zu geringeren Kosten und/oder in hoher Stückzahl und/oder in hoher Qualität ermöglicht. Insbesondere ist es eine Aufgabe der Erfindung, eine Lösung bereitzustellen, die die Ressourceneffizienz bei der Herstellung von zwei oder mehr Faserverbundbauteilen steigert.

Gemäß einem ersten Aspekt der Erfindung wird diese Aufgabe gelöst durch ein Verfahren zurzeitgleichen Herstellung von zwei oder mehr Faserverbundbauteilen, insbesondere von zwei oder mehr im Wesentlichen gleichen Faserverbundbauteilen, die eine Bauteilkontur aufweisen, umfassend Bereitstellen mindestens eines Fasermaterials, mindestens eines flächigen Trennelements und mindestens eines Matrixmaterials, wobei das mindestens eine flächige Trennelement zumindest abschnittsweise für das Matrixmaterial durchlässig ist, Herstellen eines Faserhalbzeugpakets durch schichtweises Anordnen des Fasermaterials zu übereinander angeordneten Faserhalbzeugen, wobei zwischen den Faserhalbzeugen jeweils mindestens eines der flächigen Trennelemente angeordnet ist, Infundieren des Faserhalbzeugpakets mit dem Matrixmaterial, Schneiden der Bauteilkontur in das infundierte Faserhalbzeugpaket.

Die Erfindung beruht unter anderem auf den im Folgenden dargestellten Erkenntnissen über existierende Herstellungsverfahren.

Faserverbundbauteile können mittels verschiedener Herstellungsverfahren erzeugt werden. Ein Verfahren zur Herstellung in der Regel hochwertiger Faserverbundbauteile ist die Vakuuminfusion. Bei der Vakuuminfusion wird eine Anordnung von im Wesentlichen trockenem Fasermaterial, das insbesondere als eine Vielzahl an Rovings vorliegt, von einer Folie umgeben, insbesondere im Wesentlichen fluiddicht umgeben, um den von der Folie umgebenden Raum, in der Regel mit Hilfe einer Vakuumpumpe, zu evakuieren. In Folge dessen weist das angeordnete, trockene Fasermaterial im Wesentlichen keine Luft mehr auf. Der Luftdruck presst die eingelegten Teile ferner zusammen und fixiert sie darüber hinaus.

Die eigentliche Infusion erfolgt mittels einer Bereitstellung und Zuführung von temperiertem, flüssigem Matrixmaterial, das durch das angelegte Vakuum in das Fasermaterial gesaugt wird. Nachdem die Fasern vollständig mit dem Matrixmaterial getränkt sind, wird die Zufuhr des Matrixmaterials unterbunden und das getränkte Faserverbundmaterial kann nach dem Aushärten entformt werden. Die Herstellung derartiger Faserverbundbauteile mittels der Vakuuminfusion erzeugt zwar einerseits qualitativ hochwertige Bauteile, ist jedoch mit einem hohen Aufwand verbunden, und eine Automatisierung des Verfahrens ist lediglich eingeschränkt möglich.

Der Materialabtrag bei dem Trennen mittels eines Fluidstrahls, beispielsweise mittels Wasserstrahlschneiden, beruht auf dem hohen Druck, den der Strahl auf das Werkstück ausübt. Der Wasserstrahl bei dem Wasserstrahlschneiden trennt in der Regel vor allem oberflächennah mikroskopische Partikel ab, sodass es zu keinen oder verminderten Dehnungen innerhalb des Werkstücks aufgrund von Wärme und/oder Bearbeitungskräften kommt. Durch den oberflächennahen Partikelabtrag kann sich der Wasserstrahl mit der Zeit vollständig durch ein Bauteil erstrecken, so dass dieses getrennt bzw. geschnitten werden kann. Unter der Oberfläche ist in diesem Zusammenhang insbesondere die dem Wasserstrahl zugewandte Oberfläche in der Schnittzone zu verstehen.

Grundsätzlich wird beim Trennen mittels Fluidstrahl, insbesondere beim Wasserstrahlschneiden, zwischen dem Reinwasser-/Reinfluidschneiden und dem Abrasivschneiden unterschieden. Beim Abrasivschneiden umfasst der Strahl neben dem Fluid, insbesondere dem Liquid, insbesondere Wasser, zusätzlich Abrasivmaterial. Die Qualität von wasserstrahlgeschnittenen Faserverbundbauteilen erfüllt häufig nicht die Qualitätsanforderungen, die in vielerlei Branchen heutzutage gestellt werden. Daher wird entweder eine komplexe und kostenaufwendige Einzelteilfertigung oder es werden weitere kostenaufwendige Verfahrensschritte nach dem Wasserstrahlschneiden durchgeführt.

Der Erfindung liegt insbesondere die Erkenntnis zugrunde, dass das von der Wirkstelle quer abfließende Wasser, insbesondere quer zur eigentlichen Fließrichtung des Wasserstrahls, zusätzlich noch Scherkräfte verursacht, die ebenfalls zum Materialabtrag beitragen. Insbesondere diese Scherkräfte können jedoch zu nicht ausschließlich geraden Trennstellen führen. Ferner können weitere unerwünschte Folgen auftreten, wie beispielsweise Grat oder eine geringe Oberflächengüte.

Das Faserhalbzeugpaket wird unter anderem durch schichtweises Anordnen des Fasermaterials zu übereinander angeordneten Faserhalbzeugen hergestellt. Die Faserhalbzeuge umfassen insbesondere übereinander geschichtetes Fasermaterial. Innerhalb des Faserhalbzeugpakets kann die Trennung bzw. die Unterscheidung von zwei benachbarten Faserhalbzeugen durch die Anordnung des flächigen Trennelements zwischen diesen Faserhalbzeugen erfolgen. Ferner besteht die Möglichkeit der Anordnung von Fasermatten, so dass auch vor der Anordnung der Trennelemente eine Unterscheidung der Faserhalbzeuge ermöglicht wird.

Ein Aufbau des Faserhalbzeugpakets kann beispielsweise durch ein schichtweises Anordnen des Fasermaterials zu einem Faserhalbzeug begonnen werden. Daraufhin kann ein Trennelement auf der zuoberst liegenden Fasermaterialschicht angeordnet werden und darüber wiederum schichtweise Fasermaterial zu einem Faserhalbzeug angeordnet werden. Durch mehrfaches Durchführen der im Vorherigen genannten Schritte kann dann ein Faserhalbzeugpaket mit einer Vielzahl an Faserhalbzeugen, die übereinander angeordnet sind und durch ein Trennelement voneinander im Wesentlichen getrennt sind, hergestellt werden. Das Infundieren des Faserhalbzeugpakets mit dem Matrixmaterial kann mittels verschiedener im Stand der Technik bekannter Infusionsverfahren durchgeführt werden. Das Schneiden der Bauteilkontur in das infundierte Faserhalbzeugpaket kann beispielsweise mittels des Wasserstrahlschneidens, des funkenerosiven Schneidens, des Sägens und weiteren Verfahren durchgeführt werden.

Das flächige Trennelement ist zumindest abschnittsweise für das Matrixmaterial durchlässig, sodass das Matrixmaterial beispielsweise auch in Richtung einer Flächenorthogonalen des Trennelements durch das Faserhalbzeugpaket fließen kann. Während der Infusion wird das Faserhalbzeugpaket in der Regel im Wesentlichen evakuiert und ermöglicht, dass Matrixmaterial in das Faserhalbzeugpaket fließen kann. Damit die Evakuierung und das Fließen des Matrixmaterials erfolgen können, ist es bevorzugt, dass das flächige Trennelement einerseits ausgebildet ist, die Evakuierung zuzulassen und ferner ein Fließen des Matrixmaterials zu ermöglichen. Ferner vorzugsweise ist das flächige Trennelement als maschiges Gewebe ausgebildet. Darüber hinaus ist es bevorzugt, dass das Trennelement als durchlässiges Gewebe und/oder als Gitterelement und/oder als chemische Trennschicht und/oder als Klebschicht ausgebildet ist. In einer weiteren bevorzugten Fortbildung des Verfahrens ist vorgesehen, dass das Trennelement Durchtrittsöffnungen aufweist.

Durch das Schneiden der Bauteilkontur in das infundierte Faserhalbzeugpaket werden die herzustellenden Faserverbundbauteile freigestellt. Durch das Schneiden der Bauteilkontur in das infundierte Faserhalbzeugpaket kann ein qualitativ hochwertiger Schnitt der Bauteilkontur erfolgen. Insbesondere bei der Anwendung des Wasserstrahlschneidens können Faserverbundbauteile mit qualitativ hochwertigen Trennstellen hergestellt werden. Der Erfindung liegt unter anderem die Erkenntnis zugrunde, dass der in ein Faserhalbzeugpaket oder in übereinander angeordnete Faserverbundbauteile eintretende Wasserstrahl nach dem ersten Faserhalbzeug oder nach dem ersten Faserverbundbauteil derart abgelenkt wird, dass der Wasserstrahl einen Wasserdruck orthogonal zur vorgesehenen Strahlrichtung ausübt bzw. Richtungsanteile aufweist, die nicht parallel zur vorgesehenen Strahlrichtung sind. Da die Faserhalbzeuge im Faserhalbzeugpaket oder die übereinander angeordneten Faserverbundbauteile im Stand der Technik im Wesentlichen nicht fest miteinander verbunden sind und in der Regel Luftspalte zwischen diesen vorhanden sind, werden diese durch den Wasserstrahl weiter voneinander getrennt, sodass sich der Wasserstrahl zwischen den Faserhalbzeugen ausbreiten kann. Der Wasserstrahl kann insbesondere nicht oder wenig kontrolliert durch die Faserhalbzeuge oder Faserverbundbauteile verfahren werden.

Infolgedessen weitet sich ein Zwischenraum zwischen den Faserhalbzeugen oder den übereinander angeordneten Faserverbundbauteilen auf. Dadurch verliert der Wasserstrahl an Druck, um die unter dem zunächst geschnittenen Faserhalbzeug oder Faserverbundbauteil angeordneten restlichen Faserhalbzeuge oder Faserverbundbauteile zu schneiden. Infolgedessen wiederum ist die Schnittqualität insbesondere in tiefer gelegenen Halbzeugen des Faserhalbzeugpakets oder Faserverbundbauteilen geringer als im oberen Bereich des Faserhalbzeugpakets oder der übereinander angeordneten Faserverbundbauteile. Beim Trennen eines infundierten Faserhalbzeugpakets mit Trennelementen werden diese Nachteile gelöst, da im Wesentlichen kein Zwischenraum oder ein stark verkleinerter Zwischenraum bzw. keine Luftschicht oder eine stark verkleinerte Luftschicht zwischen den Faserhalbzeugen besteht, der durch den Wasserstrahl aufgeweitet werden kann. Neben der erhöhten Effektivität kann ferner die Effizienz der Herstellung von Faserverbundbauteilen erhöht werden, da mit dem erfindungsgemäßen Verfahren zwei oder mehr übereinander angeordnete infundierte Faserhalbzeuge mit hoher Qualität in einem gemeinsamen Arbeitsschritt geschnitten werden können. Bei hohen Qualitätsanforderungen wird derzeit vermehrt ein einzelnes Faserverbundbauteil geschnitten.

Unter der Bauteilkontur ist insbesondere die Umrisslinie der Faserverbundbauteile zu verstehen, wie sie aus dem Faserhalbzeugpaket herausgeschnitten bzw. freigestellt werden. Die Bauteilkontur ist auch der im Wesentlichen zweidimensionale Verfahrweg, den ein Schneidwerkzeug, insbesondere ein Wasserstrahl, abzufahren hat, um die Faserverbundbauteile aus dem infundierten Faserhalbzeugpaket herauszutrennen.

In einer bevorzugten Fortbildung des Verfahrens ist vorgesehen, dass dieses ein Trennen des infundierten Faserhalbzeugpakets an den Trennelementen umfasst. Durch das Trennen des infundierten Faserhalbzeugpakets an den Trennelementen werden die Faserverbundbauteile gewonnen. Die Faserverbundbauteile sind durch die infundierten Faserhalbzeuge entstanden, wobei im infundierten Faserhalbzeugpaket noch die Trennelemente zwischen den nun infundierten Faserhalbzeugen angeordnet sind. Durch das Auftrennen des infundierten Faserhalbzeugpakets an den Trennelementen und durch das vorherige Schneiden der Bauteilkontur in das infundierte Faserhalbzeugpaket können die Faserverbundbauteile mit geringem Aufwand entnommen werden. Ohne die Trennelemente zwischen den Faserhalbzeugen bzw. nach dem Infundieren zwischen den Faserverbundbauteilen wäre ein Trennen der einzelnen Faserverbundbauteile voneinander nicht mit einfachen Schritten möglich.

In einer bevorzugten Ausführungsvariante des Verfahrens ist vorgesehen, dass für das Schneiden ein Fluid verwendet wird, das vorzugsweise ein Abrasivmaterial umfasst. Das Fluid ist ferner vorzugsweise als Liquid ausgebildet, ferner vorzugsweise Wasser und darüber hinaus vorzugsweise in Form eines Strahls, insbesondere eines gerichteten Strahls, ausgebildet. Vorzugsweise weist der gerichtete Fluidstrahl einen Druck von größer 600 bar auf. Insbesondere ist es bevorzugt, dass der Druck größer 1000 bar, und/oder größer 1500 bar und/oder größer 2000 bar ist.

Ferner vorzugsweise ist vorgesehen, dass das Trennelement als Trennfolie ausgebildet ist und vorzugsweise eine Vielzahl an Durchtrittsöffnungen aufweist, wobei die Durchtrittsöffnungen vorzugsweise gleichmäßig auf der Trennfolie verteilt sind und/oder wobei die Trennfolie vorzugsweise aus Polyethylen (PE), insbesondere Low Density Polyethylen (LDPE), besteht oder dieses umfasst.

Unter einer Trennfolie ist insbesondere ein Trennelement zu verstehen, das ein äußerst dünnes Material aufweist. Insbesondere ist die Dicke des Materials um ein Vielfaches kleiner als die Erstreckungen in einer der Richtungen der flächigen Erstreckung. Die Trennfolie kann ferner auch aus einem für ein Matrixmaterial durchlässigen Material bestehen oder dieses umfassen.

Die Durchtrittsöffnungen in der Trennfolie resultieren darin, dass die Trennfolie für das Matrixmaterial durchlässig ist. Somit unterstützt die Trennfolie mit einer Vielzahl an Durchtrittsöffnungen die Qualität der Infusion, indem das Matrixmaterial auch orthogonal zur flächigen Erstreckung des Trennelements durch das Faserhalbzeugpaket fließen kann. Darüber hinaus kann eine derartig ausgebildete Trennfolie auch das Trennen des infundierten Faserhalbzeugpakets an den Trennelementen unterstützen, indem die Klebwirkung zwischen zwei benachbarten Faserverbundbauteilen durch die Trennfolie derart gering ist, dass die Faserverbundbauteile mit möglichst geringem Aufwand voneinander trennbar sind.

Eine weitere besonders bevorzugte Ausführungsvariante des Verfahrens sieht vor, dass das Trennelement aus Trennelementabschnitten besteht oder diese umfasst und die Trennelementabschnitte abschnittsweise zwischen den benachbarten Faserhalbzeugen angeordnet sind. Insbesondere ist es bevorzugt, dass zwei oder mehr Trennelementabschnitte abschnittsweise zwischen den benachbarten Faserhalbzeugen angeordnet sind. Somit besteht die Möglichkeit, dass auch matrixmaterialundurchlässige Trennelementabschnitte eingesetzt werden, wobei die Durchlässigkeit für das Matrixmaterial durch die abschnittsweise Anordnung der Trennelementabschnitte erreicht wird.

Eine weitere bevorzugte Fortbildung des Verfahrens sieht vor, dass das Trennelement vollständig zwischen zwei benachbarten Faserhalbzeugen angeordnet ist. Ferner vorzugsweise ist das Trennelement vollständig innerhalb der zu schneidenden Bauteilkontur zwischen zwei benachbarten Faserhalbzeugen angeordnet. Das Trennelement kann auch an den Seiten des Faserhalbzeugpakets überstehen. Das Trennelement ist insbesondere jeweils zwischen allen benachbarten Faserhalbzeugen angeordnet.

Eine weitere besonders bevorzugte Ausführungsvariante des Verfahrens sieht vor, dass eine Schneidrichtung im Wesentlichen parallel zu einer Flächenorthogonalen des flächigen Trennelements ausgerichtet ist und/oder die Schneidrichtung in einem Winkel zu der Flächenorthogonalen des flächigen Trennelements ausgerichtet ist. Unter einer Schneidrichtung ist beispielsweise die Richtung des Liquidstrahls bzw. des Fluidstrahls bzw. des Wasserstrahls zu verstehen. Die Vorschubrichtung im Schneidverfahren ist hingegen im Wesentlichen orthogonal zu der Flächenorthogonalen des flächigen Trennelements ausgerichtet. Ferner kann die Vorschubrichtung im Schneidverfahren in einer der Richtungen der flächigen Erstreckung des Trennelements und/oder der infundierten Faserhalbzeuge ausgerichtet sein.

Insbesondere ist es bevorzugt, dass die zwei oder mehr Faserverbundbauteile eine flächige Geometrie aufweisen. Unter einer flächigen Geometrie ist insbesondere eine Geometrie zu verstehen, deren flächige Erstreckung ein Vielfaches der Dicke des Bauteils ist.

Gemäß einer weiteren bevorzugten Ausführungsvariante des Verfahrens ist vorgesehen, dass das Matrixmaterial Kunststoff umfasst oder daraus besteht und der Kunststoff vorzugsweise einen Thermoplast und/oder einen Duroplast umfasst oder daraus besteht und/oder Keramik umfasst oder daraus besteht und/oder Zement umfasst oder daraus besteht und/oder Beton umfasst oder daraus besteht. Es ist ferner vorgesehen, dass das Matrixmaterial Metall umfasst oder daraus besteht und/oder Kohlenstoff umfasst oder daraus besteht.

Ferner ist es bevorzugt, dass das Fasermaterial organische Fasern, insbesondere Kohlenstofffasern, umfasst oder daraus besteht und/oder das Fasermaterial anorganische Fasern, insbesondere Glasfasern, umfasst oder daraus besteht und/oder das Fasermaterial Naturfasern umfasst oder daraus besteht.

In einer bevorzugten Fortbildung des Verfahrens ist vorgesehen, dass das Fasermaterial als Gewebe und/oder Gelege und/oder Multiaxialgelege und/oder Gesticke und/oder Vliesstoff und/oder Matten und/oder Geflechte ausgebildet ist und/oder die Fasern als Rovings vorliegen.

Anorganische Fasern können ferner als Basaltfasern, Borfasern, Keramikfasern oder Stahlfasern ausgebildet sein. Organische Fasern können ferner aus der Gruppe bestehend aus Aramidfasern, Polyesterfasern und Polyethylenfasern, welche insbesondere als High Performance Polyethylene (HPPE)-Fasern, wie beispielsweise Dyneema-Fasern, ausgewählt werden. Naturfasern können beispielsweise als Hanffasern, Flachsfasern oder Sisalfasern ausgebildet sein.

Beschrieben wird ferner ein Faserverbundbauteil, welches gemäß einem Verfahren nach mindestens einer der im Vorhergehenden beschriebenen Ausführungsvarianten hergestellt ist, welches insbesondere als Komponente eines Rotorblatts und/oder Komponente eines Luftfahrzeugs, insbesondere eines Flugzeugs, und/oder Komponente eines Wasserfahrzeugs, insbesondere eines Schiffes oder eines Bootes, und/oder Komponente eines Landfahrzeugs, insbesondere eines Automobils, und/oder Komponente im Bauwesen und/oder Isolationsbauteil für Elektronikbauteile ausgebildet ist.

Beschrieben wird ferner ein Rotorblatt einer Windenergieanlage mit mindestens einem Faserverbundbauteil, welches gemäß einem Verfahren nach mindestens einer der im Vorhergehenden beschriebenen Ausführungsvarianten hergestellt ist.

Beschrieben wird ferner eine Windenergieanlage, umfassend einen Turm, eine Gondel und einen Rotor, wobei der Turm und/oder die Gondel und/oder der Rotor ein Faserverbundbauteil aufweist, welches gemäß einem Verfahren nach mindestens einer der im Vorhergehenden beschriebenen Ausführungsvarianten hergestellt ist, oder ein Rotorblatt nach dem vorhergehenden Aspekt.

Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Verfahrens verwiesen.

Bevorzugte Ausführungsformen der Erfindung werden beispielhaft anhand der beiliegenden Figuren erläutert. Es zeigen:
- Fig. 1:: eine schematische, dreidimensionale Ansicht einer beispielhaften Ausführungsform einer Windenergieanlage;
- Fig. 2:: eine schematische, zweidimensionale Ansicht eines im Stand der Technik bekannten Verfahrens zum Schneiden von Faserverbundbauteilen;
- Fig. 3:: eine schematische, zweidimensionale Ansicht einer beispielhaften Ausführungsform des Verfahrens zur zeitgleichen Herstellung von zwei oder mehr Faserverbundbauteilen;
- Fig. 4:: eine schematische, dreidimensionale Ansicht einer beispielhaften Ausführungsform eines infundierten Faserhalbzeugpakets;
- Fig. 5:: eine schematische, dreidimensionale Ansicht ausgeschnittener Faserverbundbauteile aus dem in Figur 4 gezeigten Faserhalbzeugpakets vor dem Trennen;
- Fig. 6:: eine schematische, dreidimensionale Ansicht von aus dem in Figur 4 gezeigten Faserhalbzeugpaket geschnittenen und getrennten Faserverbundbauteilen.

In den Figuren sind gleiche oder im Wesentlichen funktionsgleiche bzw. -ähnliche Elemente mit den gleichen Bezugszeichen bezeichnet.

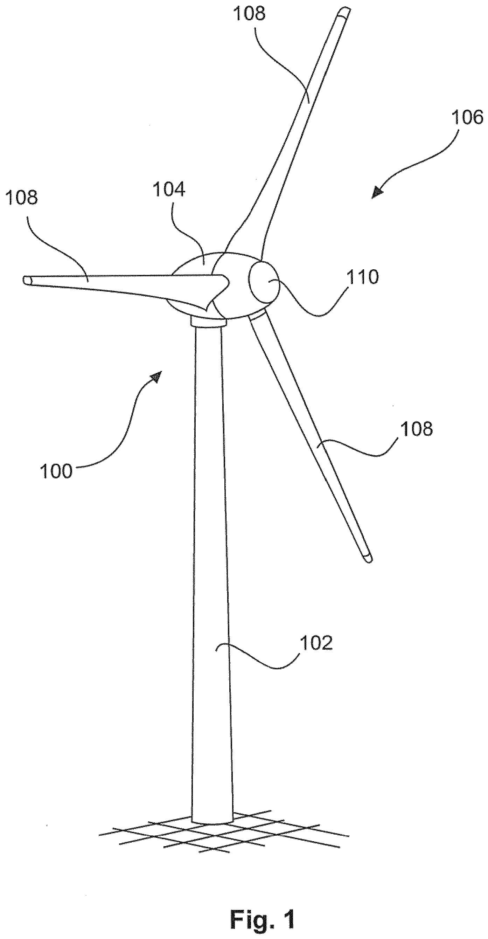

Figur 1 zeigt eine schematische, dreidimensionale Ansicht einer beispielhaften Ausführungsform einer Windenergieanlage. Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Faserverbundbauteile, die mit dem erfindungsgemäßen Verfahren zur zeitgleichen Herstellung von zwei oder mehr Faserverbundbauteilen hergestellt sind, können für unterschiedliche Komponenten der Windenergieanlage 100 genutzt werden. Beispielsweise können einzelne Strukturbauteile der Rotorblätter 108 aus Faserverbundbauteilen hergestellt werden.

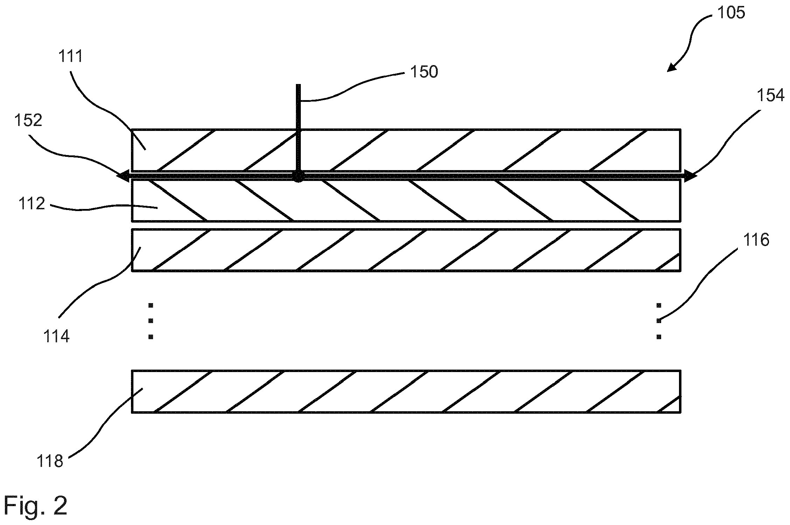

Figur 2 zeigt eine schematische, zweidimensionale Ansicht eines im Stand der Technik bekannten Verfahrens zum Schneiden von Faserverbundbauteilen. Ein Bauteilpaket 105 umfasst ein erstes Faserverbundbauteil 111, ein zweites Faserverbundbauteil 112, ein drittes Faserverbundbauteil 114, ein n-tes Faserverbundbauteil 118, wobei zwischen dem dritten Faserverbundbauteil 114 und dem n-ten Faserverbundbauteil 118 eine Vielzahl an weiteren Faserverbundbauteilen 116 angeordnet ist. Das Bauteilpaket 105 besteht im Wesentlichen aus übereinander angeordneten Faserverbundbauteilen. Die Faserverbundbauteile 111 - 118 sind im Wesentlichen nicht miteinander verbunden.

Durch den Fluidstrahl 150 soll das Bauteilpaket 105 in Richtung der Fluidstrahlrichtung geschnitten werden, sodass die Faserverbundbauteile eine Bauteilkontur aufweisen. Die Fluidstrahlrichtung ist im Wesentlichen parallel zu einer Flächenorthogonalen der Faserverbundbauteile 111 - 118 gerichtet. Die Erfindung beruht unter anderem auf der Erkenntnis, dass bei bisherigen Lösungen nach dem Stand der Technik Nachteile beim Trennen mit einem Fluidstrahl insbesondere dadurch auftreten, dass die Faserverbundbauteile 111 - 118 und insbesondere das erste und das zweite Faserverbundbauteil 111, 112 nicht miteinander verbunden sind. Die Erfindung beruht unter anderem auf der Erkenntnis, dass dieser Mangel bei existierenden Lösungen insbesondere darin begründet liegt, dass durch den Luftspalt zwischen dem ersten und zweiten Faserverbundbauteil 111, 112 der Fluidstrahl umgelenkt, und/oder verlangsamt, und/oder gestoppt wird und/oder eine Druckreduktion erfährt. Infolgedessen kann der Fluidstrahl nicht kontrolliert oder mit verminderter Genauigkeit die Kontur durch die mehreren Faserverbundbauteile schneiden bzw. erst gar nicht alle Faserverbundbauteile durchdringen. Eine weitere Auswirkung der Umlenkung ist, dass in der Umlenkungsebene, welche im Wesentlichen flächenparallel zu den Faserverbundbauteilen 111 - 118 angeordnet ist, die Faserverbundbauteile 111 - 118 durch den Wasserdruck auseinandergedrückt und gegeneinander verschoben werden. Infolgedessen ist ein relativ hochwertiger Schnitt mittels eines Fluidstrahls nicht oder lediglich vermindert möglich.

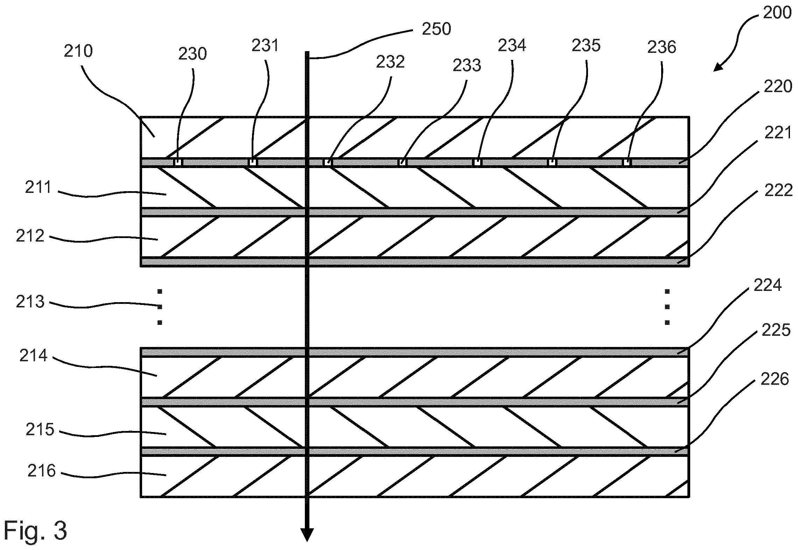

Diese Nachteile können durch die vorliegende Erfindung und ihre vorteilhaften Ausgestaltungen reduziert oder vermieden werden. Figur 3 zeigt eine schematische, zweidimensionale Ansicht einer beispielhaften Ausführungsform des Verfahrens zur zeitgleichen Herstellung von zwei oder mehr Faserverbundbauteilen. Das infundierte Faserhalbzeugpaket 200 umfasst ein erstes infundiertes Faserhalbzeug 210, ein zweites infundiertes Faserhalbzeug 211, ein drittes infundiertes Faserhalbzeug 212, ein (n-2)-tes infundiertes Faserhalbzeug 214, ein (n-1)-tes infundiertes Faserhalbzeug 215 und ein n-tes infundiertes Faserhalbzeug 216, wobei zwischen dem dritten infundierten Faserhalbzeug 212 und dem (n-2)-ten Faserhalbzeug 214 eine Vielzahl an infundierten Faserhalbzeugen 213 mit Trennelementen angeordnet sind.

Darüber hinaus umfasst das infundierte Faserhalbzeugpaket 200 Trennelemente 220 - 226, welche jeweils zwischen zwei benachbarten infundierten Faserhalbzeugen angeordnet sind. Das erste Trennelement 220 ist beispielsweise zwischen dem ersten infundierten Faserhalbzeug 210 und dem zweiten infundierten Faserhalbzeug 211 angeordnet. Das infundierte Faserhalbzeugpaket 200 mit den infundierten Faserhalbzeugen 210 - 216 und den jeweils dazwischen angeordneten Trennelementen 220 - 226 wurde mit diesen Bestandteilen infundiert. Durch die gemeinsame Infusion der Faserhalbzeuge 210 - 216 sind diese fest aneinander angeordnet. Durch diese feste Anordnung aneinander kann nun mittels eines Fluidstrahls 250 ein Schnitt mit einer hohen Qualität, beispielsweise einer geringen Oberflächenrauigkeit und/oder wenig Grat, durchgeführt werden.

Um die infundierten Faserhalbzeuge 210 - 216 wieder voneinander trennen zu können, sind die Trennelemente 220 - 226 jeweils zwischen diesen angeordnet. Die Trennelemente 220 - 226 weisen jeweils eine Durchlässigkeit für das Matrixmaterial auf. Diese Durchlässigkeit ermöglicht es, eine qualitativ hochwertige Infusion des Faserhalbzeugpakets 200 zu erzielen. Exemplarisch für das erste Trennelement 220 sind eine Mehrzahl an Durchtrittsöffnungen 230 - 236 dargestellt. Vorzugsweise weist jedes der Trennelemente 220 - 226 eine Mehrzahl an Durchtrittsöffnungen auf. Die Durchtrittsöffnungen des ersten Trennelements 220 sind hier vorliegend schematisch dargestellt, da eine Durchlässigkeit für Matrixmaterial in den Trennelementen 220 - 226 vorzugsweise durch eine sehr hohe Anzahl an Durchtrittsöffnungen erreicht werden kann. Beispielsweise kann eine Durchlässigkeit der Trennfolie über ein entsprechendes Material, beispielsweise ein Gewebe oder eine gelochte Folie, erreicht werden. Alternativ vorzugsweise umfasst das Trennelement zwei oder mehrere Trennelementabschnitte, wobei die Trennelementabschnitte vorzugsweise derart angeordnet sind, dass zwischen diesen eine Durchlässigkeit für das Matrixmaterial besteht. Infolgedessen kann das Trennelement bzw. die zwei oder mehreren Trennelementabschnitte aus einem matrixundurchlässigen Material bestehen oder dieses umfassen, da das Matrixmaterial zwischen den Trennelementabschnitten hindurch gelangen kann.

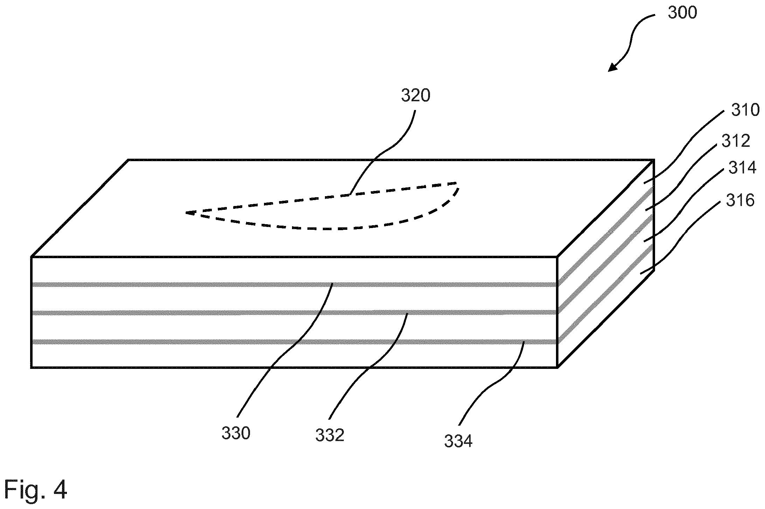

Figur 4 zeigt eine schematische, dreidimensionale Ansicht einer beispielhaften Ausführungsform eines infundierten Faserhalbzeugpakets 300. Das Faserhalbzeugpaket 300 umfasst ein erstes infundiertes Faserhalbzeug 310, ein zweites infundiertes Faserhalbzeug 312, ein drittes infundiertes Faserhalbzeug 314 und viertes infundiertes Faserhalbzeug 316, wobei zwischen den infundierten Faserhalbzeugen jeweils ein Trennelement 330, 332, 334 angeordnet ist. Ferner ist schematisch die Bauteilkontur 320 der auszuschneidenden Faserverbundbauteile dargestellt.

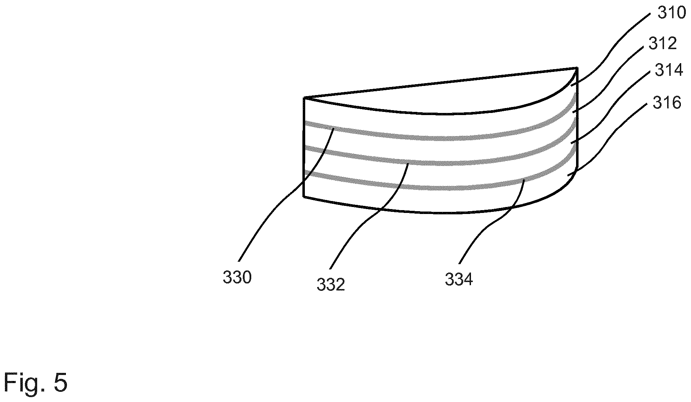

In der Figur 5 ist eine schematische, dreidimensionale Ansicht der ausgeschnittenen Faserverbundbauteile aus dem in Figur 4 gezeigten Faserhalbzeugpakets vor dem Trennen gezeigt. Das Ausschneiden kann beispielsweise mittels eines Wasserstrahlschneidprozesses erfolgt sein. Es ist zu erkennen, dass das ausgeschnittene Element zwar die Kontur der herzustellenden Faserverbundbauteile bereits aufweist, jedoch noch eine Mehrzahl, hier vier, infundierter Faserverbundbauteile übereinander angeordnet ist und zwischen diesen jeweils ein Trennelement 330, 332, 334 angeordnet ist. In einem anschließenden Schritt erfolgt das Trennen jeweils an den Trennelementen 330, 332, 334, so dass die herzustellenden Faserverbundbauteile vorliegen.

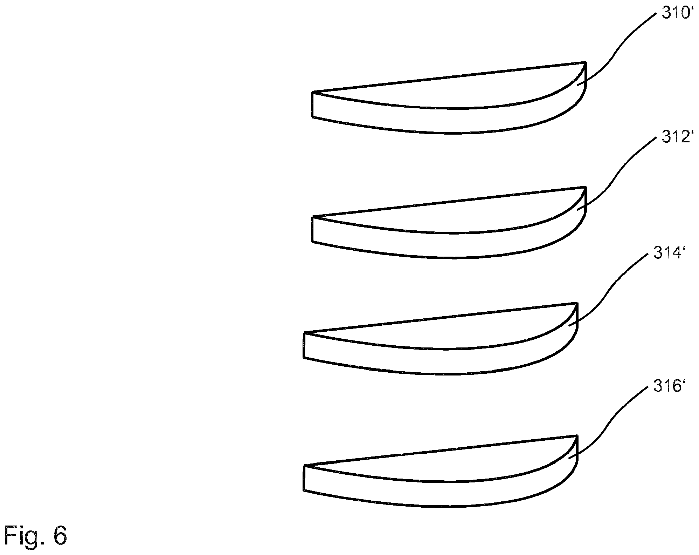

Figur 6 zeigt eine schematische, dreidimensionale Ansicht von derartig aus dem in Figur 4 gezeigten Faserhalbzeugpaket geschnittenen und getrennten Faserverbundbauteilen 310', 312', 314', 316'. Die Faserverbundbauteile 310', 312', 314', 316' entsprechen im Wesentlichen jeweils der Geometrie der infundierten Faserhalbzeuge 310, 312, 314, 316, wobei die Faserverbundbauteile 310', 312', 314', 316' die fertigen Bauteile darstellen und die infundierten Faserhalbzeuge 310, 312, 314, 316 Zwischenprodukte der Faserverbundbauteile 310', 312', 314', 316' sind, deren Kontur beispielsweise noch aus dem Faserhalbzeugpaket 300 geschnitten und die beispielsweise noch von den jeweils benachbarten infundierten Faserhalbzeugen getrennt werden müssen. Gegebenenfalls werden zusätzlich auch noch die Trennelemente 330, 332, 334 und/oder Bestandteile der Trennelemente 330, 332, 334 von den infundierten Faserhalbzeugen 310, 312, 314, 316 entfernt, um die Faserverbundbauteil 310', 312', 314', 316' zu erhalten.

### BEZUGSZEICHEN

- 100: Windenergieanlage
- 102: Turm
- 104: Gondel
- 105: Bauteilpaket
- 106: Rotor
- 108: Rotorblatt
- 110: Spinner
- 111: erstes Faserverbundbauteil
- 112: zweites Faserverbundbauteil
- 114: drittes Faserverbundbauteil
- 116: Vielzahl an Faserverbundbauteilen
- 118: n-tes Faserverbundbauteil
- 150: Fluidstrahl
- 152: erster Fluidaustritt
- 154: zweiter Fluidaustritt
- 200: infundiertes Faserhalbzeugpaket
- 210: erstes infundiertes Faserhalbzeug
- 211: zweites infundiertes Faserhalbzeug
- 212: drittes infundiertes Faserhalbzeug
- 213: Vielzahl an infundierten Faserhalbzeugen mit Trennelementen
- 214: (n-2)-tes infundiertes Faserhalbzeug
- 215: (n-1)-tes infundiertes Faserhalbzeug
- 216: n-tes infundiertes Faserhalbzeug
- 220: erstes Trennelement
- 221: zweites Trennelement
- 222: drittes Trennelement
- 224: (m-2)-tes Trennelement
- 225: (m-1)-tes Trennelement
- 226: m-tes Trennelement
- 230: erste Durchtrittsöffnung
- 231: zweite Durchtrittsöffnung
- 232: dritte Durchtrittsöffnung
- 233: vierte Durchtrittsöffnung
- 234: fünfte Durchtrittsöffnung
- 235: sechste Durchtrittsöffnung
- 236: siebte Durchtrittsöffnung
- 250: Fluidstrahl
- 300: infundiertes Faserhalbzeugpaket
- 310: erstes infundiertes Faserhalbzeug
- 310': erstes Faserverbundbauteil
- 312: zweites infundiertes Faserhalbzeug
- 312': zweites Faserverbundbauteil
- 314: drittes infundiertes Faserhalbzeug
- 314': drittes Faserverbundbauteil
- 316: viertes infundiertes Faserhalbzeug
- 316': viertes Faserverbundbauteil
- 320: Bauteilkontur
- 330: erstes Trennelement
- 332: zweites Trennelement
- 334: drittes Trennelement

## Patentansprüche

1. Verfahren zur zeitgleichen Herstellung von zwei oder mehr Faserverbundbauteilen (310', 312', 314', 316'), insbesondere von zwei oder mehr im Wesentlichen gleichen Faserverbundbauteilen, die eine Bauteilkontur (320) aufweisen, umfassend
- Bereitstellen mindestens eines Fasermaterials, mindestens eines flächigen Trennelements (220, 221, 222, 224, 225, 226, 330, 332, 334) und mindestens eines Matrixmaterials,
- Herstellen eines Faserhalbzeugpakets (200, 300) durch schichtweises Anordnen des Fasermaterials zu übereinander angeordneten Faserhalbzeugen (210-216, 310-316), wobei zwischen den Faserhalbzeugen (210-216, 310-316) jeweils mindestens eines der flächigen Trennelemente (220, 221, 222, 224, 225, 226, 330, 332, 334) angeordnet ist,
- Infundieren des Faserhalbzeugpakets (200, 300) mit dem Matrixmaterial, **gekennzeichnet durch**
- Schneiden der Bauteilkontur (320) in das infundierte Faserhalbzeugpaket (200, 300) und **dadurch, dass** das mindestens eine flächige Trennelement (220, 221, 222, 224, 225, 226, 330, 332, 334) zumindest abschnittsweise für das Matrixmaterial durchlässig ist.

2. Verfahren gemäß dem vorhergehenden Anspruch, umfassend
- Trennen des infundierten Faserhalbzeugpakets (200, 300) an den Trennelementen (220, 221, 222, 224, 225, 226, 330, 332, 334).

3. Verfahren gemäß mindestens einem der vorhergehenden Ansprüche, wobei
- für das Schneiden ein Fluid verwendet wird, das vorzugsweise ein Abrasivmaterial umfasst und das Fluid vorzugsweise als Fluidstrahl (250) bereitgestellt wird.

4. Verfahren gemäß mindestens einem der vorhergehenden Ansprüche, wobei
- das Trennelement (220, 221, 222, 224, 225, 226, 330, 332, 334) als Trennfolie ausgebildet ist und vorzugsweise eine Vielzahl an Durchtrittsöffnungen (230-236) aufweist,
- wobei die Durchtrittsöffnungen (230-236) vorzugsweise gleichmäßig auf der Trennfolie verteilt sind, und/oder
- wobei die Trennfolie vorzugsweise aus einem Polyethylen (PE), insbesondere Low Density Polyethylen (LDPE), besteht oder dieses umfasst.

5. Verfahren gemäß mindestens einem der vorhergehenden Ansprüche, wobei
- das Trennelement (220, 221, 222, 224, 225, 226, 330, 332, 334) als durchlässiges Gewebe, und/oder
- als Gitterelement, und/oder
- als chemische Trennschicht, und/oder
- als Klebschicht
ausgebildet ist.

6. Verfahren gemäß mindestens einem der vorhergehenden Ansprüche, wobei
- das Trennelement (220, 221, 222, 224, 225, 226, 330, 332, 334) aus Trennelementabschnitten besteht oder diese umfasst und die Trennelementabschnitte abschnittsweise zwischen den benachbarten Faserhalbzeugen (210-216, 310-316) angeordnet sind.

7. Verfahren gemäß mindestens einem der vorhergehenden Ansprüche, wobei
- das Trennelement (220, 221, 222, 224, 225, 226, 330, 332, 334) vollständig zwischen zwei benachbarten Faserhalbzeugen (210-216, 310-316) angeordnet ist.

8. Verfahren gemäß mindestens einem der vorhergehenden Ansprüche, wobei
- eine Schneidrichtung im Wesentlichen parallel zu einer Flächenorthogonalen des flächigen Trennelements (220, 221, 222, 224, 225, 226, 330, 332, 334) ausgerichtet ist, und/oder
- die Schneidrichtung in einem Winkel zu der Flächenorthogonalen des flächigen Trennelements (220, 221, 222, 224, 225, 226, 330, 332, 334) ausgerichtet ist.

9. Verfahren gemäß mindestens einem der vorhergehenden Ansprüche, wobei
- die zwei oder mehr Faserverbundbauteile (310', 312', 314', 316') eine flächige Geometrie aufweisen.

10. Verfahren gemäß mindestens einem der vorhergehenden Ansprüche, wobei das Matrixmaterial
- Kunststoff umfasst oder daraus besteht und der Kunststoff vorzugsweise einen Thermoplast und/oder einen Duroplast umfasst oder daraus besteht, und/oder
- Keramik umfasst oder daraus besteht, und/oder
- Zement umfasst oder daraus besteht, und/oder
- Beton umfasst oder daraus besteht, und/oder
- Metall umfasst oder daraus besteht, und/oder
- Kohlenstoff umfasst oder daraus besteht.

11. Verfahren gemäß mindestens einem der vorhergehenden Ansprüche, wobei
- das Fasermaterial organische Fasern, insbesondere Kohlenstofffasern, umfasst oder daraus besteht, und/oder
- das Fasermaterial anorganische Fasern, insbesondere Glasfasern, umfasst oder daraus besteht, und/oder
- das Fasermaterial Naturfasern umfasst oder daraus besteht.

## Claims

1. A method for the simultaneous production of two or more fiber composite components (310', 312', 314', 316'), in particular of two or more substantially identical fiber composite components, which have a component contour (320), said method comprising:
- providing at least one fibrous material, at least one planar separation element (220, 221, 222, 224, 225, 226, 330, 332, 334), and at least one matrix material,
- producing a semi-finished fibrous pack (200, 300) by disposing the fibrous material layer-by-layer so as to form semi-finished fibrous products (210-216, 310-316) stacked on top of one another, wherein at least one of the planar separation elements (220, 221, 222, 224, 225, 226, 330, 332, 334) is in each case disposed between the semi-finished fibrous products (210-216, 310-316);
- infusing the semi-finished fibrous pack (200, 300) with the matrix material, **characterized by**
- cutting the component contour (320) into the infused semi-finished fibrous pack (200, 300) and in that the at least one planar separation element (220, 221, 222, 224, 225, 226, 330, 332, 334) at least in portions is permeable to the matrix material.

2. The method as claimed in the preceding claim, comprising:
- separating the infused semi-finished fibrous pack (200, 300) at the separation elements (220, 221, 222, 224, 225, 226, 330, 332, 334).

3. The method as claimed in at least one of the preceding claims, wherein
- a fluid which preferably comprises an abrasive material is used for cutting, and the fluid is preferably provided as a fluid jet (250).

4. The method as claimed in at least one of the preceding claims, wherein
- the separation element (220, 221, 222, 224, 225, 226, 330, 332, 334) is configured as a barrier film and preferably has a multiplicity of passage openings (230-236);
- wherein the passage openings (230-236) are preferably distributed uniformly on the barrier film; and/or
- wherein the barrier film is preferably composed of or comprises a polyethylene (PE), in particular low density polyethylene (LDPE).

5. The method as claimed in at least one of the preceding claims, wherein
- the separation element (220, 221, 222, 224, 225, 226, 330, 332, 334) is configured as a permeable woven fabric; and/or
- as a mesh element; and/or
- as a chemical barrier layer; and/or
- as an adhesive layer.

6. The method as claimed in at least one of the preceding claims, wherein
- the separation element (220, 221, 222, 224, 225, 226, 330, 332, 334) is composed of or comprises separation element portions, and the separation element portions are disposed in portions between the neighboring semi-finished fibrous products (210-216, 310-316).

7. The method as claimed in at least one of the preceding claims, wherein
- the separation element (220, 221, 222, 224, 225, 226, 330, 332, 334) is disposed completely between two neighboring semi-finished fibrous products (210-216, 310-316).

8. The method as claimed in at least one of the preceding claims, wherein
- a cutting direction is aligned so as to be substantially parallel to a surface orthogonal of the planar separation element (220, 221, 222, 224, 225, 226, 330, 332, 334); and/or
- the cutting direction is aligned at an angle to the surface orthogonal of the planar separation element (220, 221, 222, 224, 225, 226, 330, 332, 334).

9. The method as claimed in at least one of the preceding claims, wherein
- the two or more fiber composite components (310', 312', 314', 316') have a planar geometry.

10. The method as claimed in at least one of the preceding claims, wherein the matrix material
- comprises or is composed of plastics material, and the plastics material preferably comprises or is composed of a thermoplastics material and/or a thermosetting plastics material; and/or
- comprises or is composed of ceramics; and/or
- comprises or is composed of cement; and/or
- comprises or is composed of concrete; and/or
- comprises or is composed of metal; and/or
- comprises or is composed of carbon.

11. The method as claimed in at least one of the preceding claims, wherein
- the fibrous material comprises or is composed of organic fibers, in particular carbon fibers; and/or
- the fibrous material comprises or is composed of inorganic fibers, in particular glass fibers; and/or
- the fibrous material comprises or is composed of natural fibers.

## Revendications

1. Procédé de fabrication simultanée de deux éléments composites à base de fibres ou plus (310', 312', 314', 316'), en particulier de deux éléments composites à base de fibres ou plus sensiblement identiques, qui présentent un contour d'élément (320), comprenant
- la fourniture d'au moins un matériau à base de fibres, d'au moins un élément de séparation (220, 221, 222, 224, 225, 226, 330, 332, 334) plat et d'au moins un matériau de matrice,
- la fabrication d'un paquet de demi-produits à base de fibres (200, 300) en disposant par couches du matériau à base de fibres en des demi-produits à base de fibres (210-216, 310-316) disposés les uns par-dessus les autres, dans lequel respectivement au moins un des éléments de séparation (220, 221, 222, 224, 225, 226, 330, 332, 334) est disposé entre les demi-produits à base de fibre (210-216, 310-316),
- l'infusion du matériau de matrice dans le paquet de demi-produits à base de fibres (200, 300), **caractérisé par**
- la découpe du contour d'élément (320) dans le paquet de demi-produits à base de fibres (200, 300) et par le fait que l'au moins un élément de séparation (220, 221, 222, 224, 225, 226, 330, 332, 334) plat est perméable au moins par endroits au matériau de matrice.

2. Procédé selon la revendication précédente, comprenant
- la séparation du paquet de demi-produits à base de fibres (200, 300) infusé sur les éléments de séparation (220, 221, 222, 224, 225, 226, 330, 332, 334).

3. Procédé selon au moins l'une quelconque des revendications précédentes, dans lequel
- un fluide, qui comprend de préférence un matériau abrasif, est utilisé pour la découpe et le fluide est fourni de préférence en tant que jet de fluide (250).

4. Procédé selon au moins l'une quelconque des revendications précédentes, dans lequel
- l'élément de séparation (220, 221, 222, 224, 225, 226, 330, 332, 334) est réalisé en tant que film de séparation et présente de préférence une pluralité d'ouvertures de passage (230-236),
- dans lequel les ouvertures de passage (230 - 236) sont réparties de préférence de manière homogène sur le film de séparation, et/ou
- dans lequel le film de séparation est constitué de préférence d'un polyéthylène (PE), en particulier d'un polyéthylène à basse densité (LDPE) ou comprend celui-ci.

5. Procédé selon au moins l'une quelconque des revendications précédentes, dans lequel
- l'élément de séparation (220, 221, 222, 224, 225, 226, 330, 332, 334) est réalisé en tant que tissu perméable, et/ou
- en tant qu'élément grillagé, et/ou
- en tant que couche de séparation chimique, et/ou
- en tant que couche de colle.

6. Procédé selon au moins l'une quelconque des revendications précédentes, dans lequel
- l'élément de séparation (220, 221, 222, 224, 225, 226, 330, 332, 334) est constitué de sections d'élément de séparation ou comprend celles-ci et les sections d'élément de séparation sont disposées par endroits entre les demi-produits à base de fibres (210-216, 310-316) adjacents.

7. Procédé selon au moins l'une quelconque des revendications précédentes, dans lequel
- l'élément de séparation (220, 221, 222, 224, 225, 226, 330, 332, 334) est disposé en totalité entre deux demi-produits à base de fibres (210-216, 310-316) adjacents.

8. Procédé selon au moins l'une quelconque des revendications précédentes, dans lequel
- un sens de découpe est orienté de manière sensiblement parallèle par rapport à une orthogonale de surface de l'élément de séparation (220, 221, 222, 224, 225, 226, 330, 332, 334) plat, et/ou
- le sens de découpe est orienté selon un angle par rapport à l'orthogonale de surface de l'élément de séparation (220, 221, 222, 224, 225, 226, 330, 332, 334) plat.

9. Procédé selon au moins l'une quelconque des revendications précédentes, dans lequel
- les deux éléments composites à base de fibres (310', 312', 314', 316') ou plus présentent une géométrie plate.

10. Procédé selon au moins l'une quelconque des revendications précédentes, dans lequel le matériau de matrice
- comprend de la matière plastique ou en est constitué et la matière plastique comprend de préférence une matière thermoplastique et/ou une matière thermodurcissable ou en est constituée, et/ou
- comprend de la céramique ou en est constitué, et/ou
- comprend du ciment ou en est constitué, et/ou
- comprend du béton ou en est constitué, et/ou
- comprend du métal ou en est constitué, et/ou
- comprend du carbone ou en est constitué.

11. Procédé selon au moins l'une quelconque des revendications précédentes, dans lequel
- le matériau à base de fibres comprend des fibres organiques, en particulier des fibres de carbone, ou en est constitué, et/ou
- le matériau à base de fibres comprend des fibres inorganiques, en particulier des fibres de verre, ou en est constitué, et/ou
- le matériau à base de fibres comprend des fibres naturelles ou en est constitué.
